# EUROPEAN PATENT APPLICATION

(11) **EP 1 737 183 A1**
(43) Date of publication of application: **27.12.2006**
(21) Application number: 06012533.3
(22) Date of filing: 19.06.2006
(51) Int. Cl.: H04L 29/06, H04Q 7/38

(54) **Wireless communication authentication**

(30) Priority: 22.06.2005 JP 2005182029
(71) Applicant: NEC Corporation, Minato-ku Tokyo (JP)
(72) Inventor: Watanabe, Yoshikazu, Tokyo 108-8001 (JP)
(74) Representative: Glawe, Delfs, Moll

(57) **Abstract**

A replay attack from an unauthorized user is easily avoided by wireless communication authentication. A mobile node acquires an inherent identification number owned by a base station connected to the mobile node, and sends authentication packet data including the identification number and information providing transfer route information for packet data sent to the mobile node through a wireless link. A router holds an inherent identification number owned by a base station connected to the router, and, if the identification number held by the router agrees with the identification number included in the authentication packet data sent from the mobile node, registers the transfer route information in a route table based on the authentication packet data.

## Description

### BACKGROUND OF THE INVENTION

### 1. Field of the Invention:

The present invention relates to a wireless communication authentication system and a wireless communication authentication method for excluding an unauthorized user from a network that is connected to a wireless communication area.

### 2. Description of the Related Art:

Generally, wireless communication systems need to authenticate legitimate users who are going to use the network in order to exclude an unauthorized user who would attempt to intercept data sent from a mobile node owned by a legitimate user to a wireless link and abuse the network based on the intercepted data.

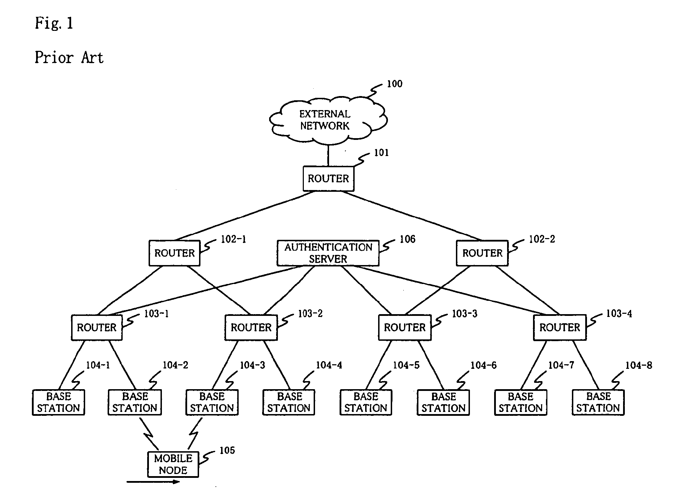

Fig. 1 of the accompanying drawings shows a conventional host routing hierarchical network comprising external network 100, a plurality of routers 101, 102-1, 102-2, 103-1 through 103-4, a plurality of base stations 104-1 through 104-8, mobile node 105, and authentication server 106. Router 101 is connected to external network 100. Routers 102-1, 102-2 are connected to and operate under router 101. Routers 103-1, 103-2 are connected to and operate under router 102-1. Routers 103-3, 103-4 are connected to and operate under router 102-2. Base stations 104-1, 104-2 are connected to and operate under router 103-1. Base stations 104-3, 104-4 are connected to and operate under router 103-2. Base stations 104-5, 104-6 are connected to and operate under router 103-3. Base stations 104-7, 104-8 are connected to and operate under router 103-4. Mobile node 105 is a node that is movable while being connected to the network. Authentication server 106 serves to authenticate data in routers 103-1 through 103-4.

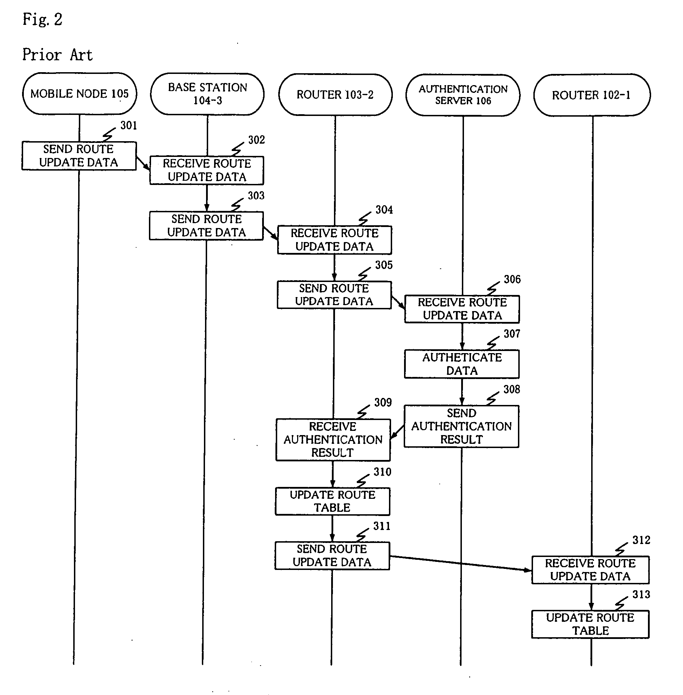

A wireless communication authentication process which is carried out in the conventional host routing hierarchical network shown in Fig. 1 will be described below with reference to Fig. 2 of the accompanying drawings.

It is assumed that mobile node 105 is currently present in an area covered by base station 104-2 and is connected to base station 104-2 through a wireless link. Therefore, data sent from mobile node 105 travels through a communication route extending from mobile node 105 through base station 104-2, router 103-1, router 102-1 to router 101. The communication route is held in route tables that are owned respectively by routers 101, 102-1, 103-1.

Thereafter, mobile node 105 moves from the area covered by base station 104-2 into an area covered by base station 104-3.

When mobile node 105 moves, it sends route update data to base station 104-3 (step 301). The route update data includes the identifier of a destination router, the identifier of mobile node 105, a time stamp or a sequence number.

When the route update data sent from mobile node 105 is received by base station 104-3 (step 302), the received route update data is sent from base station 104-3 to router 103-2 (step 303).

When the route update data sent from base station 104-3 is received by router 103-2 (step 304), the received route update data is sent from router 103-2 to authentication server 106 (step 305).

When the route update data sent from router 103-2 is received by authentication server 106 (step 306), the received route update data is authenticated by authentication server 106 (step 307).

The route update data includes an authentication code in addition to the items described above. The authentication code is calculated by a hash function from a secret key and the above items, other than the authentication code, of the route update data. The secret key can be recognized by only authentication server 106 and mobile node 105. In step 307, the route update data is authenticated by recalculating the authentication code and determining whether the received authentication code is correct or not.

Even if the route update data is intercepted and used by an unauthorized user in the wireless zone between mobile node 105 and base stations 104-1 through 104-8, the route update data thus intercepted and used is rejected as incorrect data. Specifically, since the route update data includes the time stamp or the sequence number, authentication server 106 detects a duplication of the time stamp or the sequence number and judges that the duplicated route update data is used by an unauthorized user.

When authentication server 106 authenticates the route update data, authentication server 106 sends an authentication result to router 103-2 (step 308).

When the authentication result sent from authentication server 106 is received by router 103-2 (step 309), if the authentication result is GOOD, then the route table in router 103-2 is updated based on the route update data which has been authenticated and information indicating that the base station to which the route update data has been sent is base station 104-3 (step 310). At this time, the route table in router 103-2 is updated such that data to be sent to mobile node 105 will be routed through base station 104-3. If the authentication result is NOT GOOD, then the route table is not updated, and the authentication process is put to an end.

After the route table in router 103-2 is updated, the route update data is sent from router 103-2 to router 102-1 (step 312). Based on the received route update data and information indicating that the route update data is sent from router 103-2, the route table in router 102-1 is updated (step 313). At this time, the route table in router 102-1 is updated such that data to be sent to mobile node 105 will be routed through router 103-2.

Router 101 which is higher in level than router 102-1 already has route information with respect to mobile node 105 and the route information does not need to be changed. Therefore, the route update data is not sent from router 102-1 to router 101.

However, because one common authentication server is used to authenticate the route update data in routers 103-1 through 103-4, problems arise as follows:

When a mobile node switches base stations which the mobile node connected to according to a technique known as handover for wireless communication systems, the authentication server authenticates the connected user for the base station which is newly connected to the mobile node. If the authentication server is widely spaced from the newly connected base station, then an authentication packet transmitted between the authentication server and the base station suffers a transmission delay, possibly resulting in a communication failure time upon handover.

It has been considered to reduce the transmission delay time by placing a plurality of authentication servers in respective positions close to the base stations or designing the base stations such that they also serve as authentication servers.

However, the above solutions make it possible for an unauthorized user to use the network based on a replay attack. The replay attack is one of hacking attempts to eavesdrop on the password or the encryption key of a user and use it to masquerade the user.

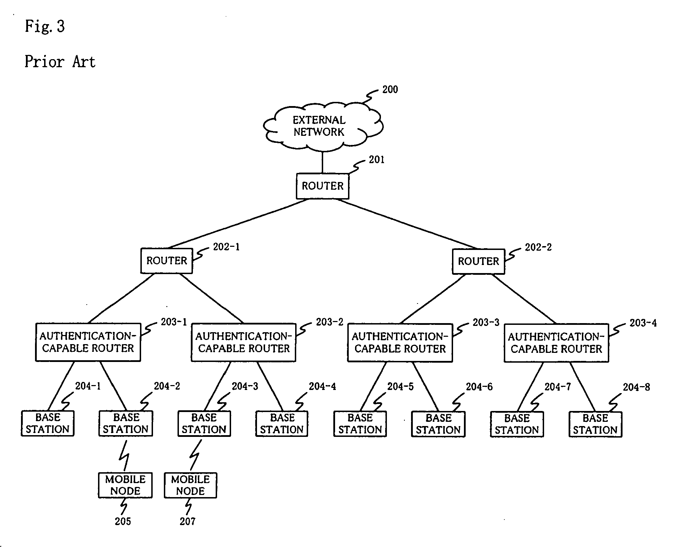

Fig. 3 of the accompanying drawings shows a wireless communication authentication system employing routers which also serve as authentication servers. The wireless communication authentication system shown in Fig. 3 comprises external network 200, a plurality of authentication-capable routers 201, 202-1, 202-2, a plurality of base stations 204-1 through 204-8, and mobile nodes 205, 207. Router 201 is connected to external network 200. Routers 202-1, 202-2 are connected to and operate under router 201. Authentication-capable routers 203-1, 203-2 are edge routers with an authenticating function which are connected to and operate under router 202-1. Authentication-capable routers 203-3, 203-4 are edge routers with an authenticating function which are connected to and operate under router 202-2. Base stations 204-1, 204-2 are connected to and operate under authentication-capable router 203-1. Base stations 204-3, 204-4 are connected to and operate under authentication-capable router 203-2. Base stations 204-5, 204-6 are connected to and operate under authentication-capable router 203-3. Base stations 204-7, 204-8 are connected to and operate under router 203-4. Mobile nodes 205, 207 are nodes that are movable while being connected to the network. Mobile node 207 is the mobile node of an unauthorized user who intercepts route update data in a wireless zone between mobile node 205 and base station 204-2 and attempts to masquerade mobile node 205 to use the network.

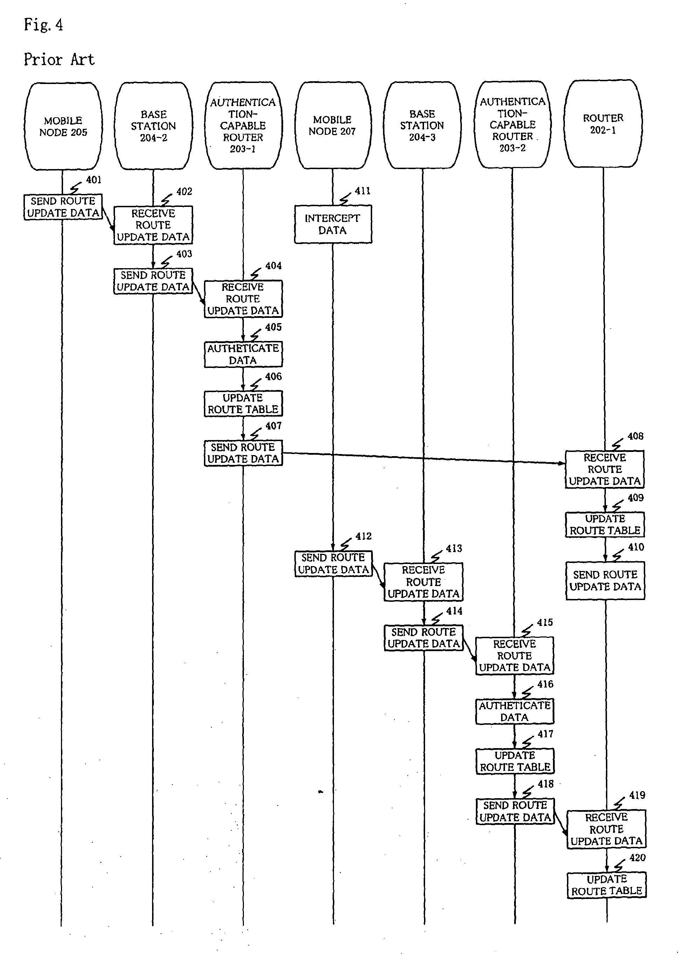

A wireless communication authentication process which is carried out in the wireless communication authentication system shown in Fig. 3 will be described below with reference to Fig. 4 of the accompanying drawings.

It is assumed that mobile node 205 is currently present in an area covered by base station 204-2 and is going to be connected to base station 204-2 through a wireless link. Mobile node 205 sends route update data to base station 204-2 (step 401). The route update data includes the identifier of a destination router, the identifier of mobile node 205, a time stamp or a sequence number.

When the route update data sent from mobile node 205 is received by base station 204-2 (step 402), the received route update data is sent from base station 204-2 to authentication-capable router 203-1 (step 403).

When the route update data sent from base station 204-2 is received by authentication-capable router 203-1 (step 404), the received route update data is authenticated by authentication-capable router 203-1 (step 405).

The route update data includes an authentication code in addition to the items described above. The authentication code is calculated by a hash function from a secret key and the above items, other than the authentication code, of the route update data. The secret key is recognized by only authentication-capable routers 203-1 through 203-4 and mobile node 205. In step 405, the route update data is authenticated by recalculating the authentication code and determining whether the received authentication code is correct or not.

If the authentication result produced by authentication-capable router 203-1 is GOOD, then the route table in authentication-capable router 203-1 is updated based on the route update data which has been authenticated and information indicating that the base station to which the route update data has been sent is base station 204-2 (step 406). At this time, the route table in authentication-capable router 203-1 is updated such that data to be sent to mobile node 205 will be routed through base station 204-2. If the authentication result is NOT GOOD, then the route table is not updated, and the authentication process is put to an end.

After the route table in authentication-capable router 203-1 is updated, the route update data is sent from authentication-capable router 203-1 to router 202-1 (step 407).

When the route update data sent from authentication-capable router 203-1 is received by router 202-1 (step 408), the route table in router 202-1 is updated based on the received route update data and information indicating that authentication-capable router from which the route update data has been sent is authentication-capable router 203-1 (step 409). At this time, the route table in router 202-1 is updated such that data to be sent to mobile node 205 will be routed through authentication-capable router 203-1. Thereafter, the route update data is sent from router 202-1 to router 201 (step 410).

The route update data sent from mobile node 205 to base station 204-2 in step 401 is intercepted by mobile node 207 owned by an unauthorized user who is present in the area covered by base station 204-3 (step 411). Mobile node 207 masquerades mobile node 205 and sends the intercepted route update data to base station 204-3 (step 412). The route update data sent from mobile node 207 is received by base station 204-3 (step 413). The received route update data is sent from base station 204-3 to authentication-capable router 203-2 (step 414).

When the route update data sent from base station 204-3 is received by authentication-capable router 203-2 (step 415), the received route update data is authenticated by authentication-capable router 203-2 (step 416).

Unlike authentication server 106 shown in Fig. 1 which is common to all the routers, the individual routers shown in Fig. 3 have respective authenticating functions. Therefore, even though the route update data includes a sequence number or a time stamp, the route update data that includes the same sequence number or the same time stamp is received by the different authentication-capable routers. Each of the authentication-capable routers is thus unable to determine whether the route update data is incorrect or not from its authentication records, but recognizes all successfully authenticated route update data as legitimate route update data. Accordingly, the data used by the unauthorized user is not excluded, but is normally processed.

If the authentication result produced by authentication-capable router 203-2 is GOOD, then the route table in authentication-capable router 203-2 is updated based on the route update data which has been authenticated and information indicating that the base station to which the route update data has been sent is base station 204-3 (step 417). At this time, the route table in authentication-capable router 203-2 is updated such that data to be sent to mobile node 205 will be routed through base station 204-3. If the authentication result is NOT GOOD, then the route table is not updated, and the authentication process is put to an end.

After the route table in authentication-capable router 203-2 is updated, the route update data is sent from authentication-capable router 203-2 to router 202-1 (step 418).

When the route update data sent from authentication-capable router 203-2 is received by router 202-1 (step 419), the route table in router 202-1 is updated based on the received route update data and information indicating that authentication-capable router from which the route update data has been sent is authentication-capable router 203-2 (step 420). At this time, the route table in router 202-1 is updated such that data to be sent to mobile node 205 will be routed through authentication-capable router 203-2.

As described above, the communication route to legitimate mobile node 205, which has been updated in step 409, is changed by mobile node 207 that has impersonated mobile node 205. Consequently, legitimate mobile node 205 is no longer able to use the wireless communication authentication system.

In view of the above problems, a process of excluding an unauthorized user is disclosed in JP-1995-203540A. According to the disclosed process, the base stations of a wireless communication network have respective authenticating functions. When a mobile node sends a connection request to a base station, the base station sends an inherent identification number of its own to the mobile node. The mobile node generates an authentication code as well as other route information based on the identification number, adds the authentication code to route update data, and sends the route update data to the base station. The base station determines, based on its authenticating function, whether the identification number included in the received route update data is the same as the identification number of the base station or not. An unauthorized user who has sent route update data including a different identification number is thus excluded.

The process disclosed in the above patent document is problematic in that many base stations installed in a wireless communication area need to have respective authenticating functions, and an edge router has to recognize whether all base stations connected to and operable under the edge router have respective authenticating functions or not. In addition, if there is a base station having no authenticating function, then the edge router is required to perform some authenticating process on its own.

### SUMMARY OF THE INVENTION

It is an object of the present invention to provide a wireless communication authentication system and a wireless communication authentication method which are capable of performing a quick authentication process for avoiding a replay attack carried out by an unauthorized user, without the need for the addition of authenticating functions to respective base stations.

According to the present invention, a mobile node acquires an inherent identification number owned by a base station connected to the mobile node. The mobile node sends authentication packet data including the acquired identification number and information providing transfer route information through the base station to a router. If the identification number of the base station which is included in the authentication packet data sent from the mobile node and received by the router and an inherent identification number held by the router and owned by a base station connected to the router agree with each other, then the transfer route information is registered in a route table in the router based on the authentication packet data.

As described above, only if the identification number of the base station which is included in the authentication packet data sent from the mobile node agrees with the identification number of the base station which is held by the router, the transfer route information is registered in the route table in the router based on the authentication packet data. Even if an unauthorized user intercepts authentication packet data on a wireless link and sends the intercepted authentication packet data to a different router, the identification number of the base station which is included in the authentication packet data and the identification number of the base station which is held by the router do not agree with each other, and no transfer route information is registered in the route table. Consequently, a transfer route based on the data sent from the unauthorized user is not established, and the unauthorized user is excluded from the network. If the function according to the present invention is provided in the router, then the function does not need to be provided in each of a number of base stations installed in a wireless area. Furthermore, each of routers used independently operates to perform the above sequence, a high-speed authentication process can be carried out.

The above and other objects, features, and advantages of the present invention will become apparent from the following description with reference to the accompanying drawings which illustrate examples of the present invention.

### BRIEF DESCRIPTION OF THE DRAWINGS

Fig. 1 is a block diagram of a conventional host routing hierarchical network to which a mobile node is connected;
Fig. 2 is a sequence diagram illustrative of a wireless communication authentication process which is carried out in the conventional host routing hierarchical network shown in Fig. 1;
Fig. 3 is a block diagram of a wireless communication authentication system employing routers which also serve as authentication servers;
Fig. 4 is a sequence diagram illustrative of a wireless communication authentication process which is carried out in the wireless communication authentication system shown in Fig. 3;
Fig. 5 is a block diagram of a wireless communication authentication system according to a first embodiment of the present invention;
Fig. 6 is a block diagram of an authentication-capable router in the wireless communication authentication system shown in Fig. 5;
Fig. 7 is a block diagram of a mobile node in the wireless communication authentication system shown in Fig. 5;
Fig. 8 is a sequence diagram illustrative of a wireless communication authentication process which is carried out in the wireless communication authentication system shown in Figs. 5 through 7;
Fig. 9 is a block diagram of a wireless communication authentication system according to a second embodiment of the present invention;
Fig. 10 is a block diagram of a RADIUS server in the wireless communication authentication system shown in Fig. 9;
Fig. 11 is a block diagram of a mobile node in the wireless communication authentication system shown in Fig. 9; and
Fig. 12 is a sequence diagram illustrative of a wireless communication authentication process which is carried out in the wireless communication authentication system shown in Figs. 9 through 11.

### DETAILED DESCRIPTION OF THE PREFERRED EMBODIMENTS

### 1st Embodiment:

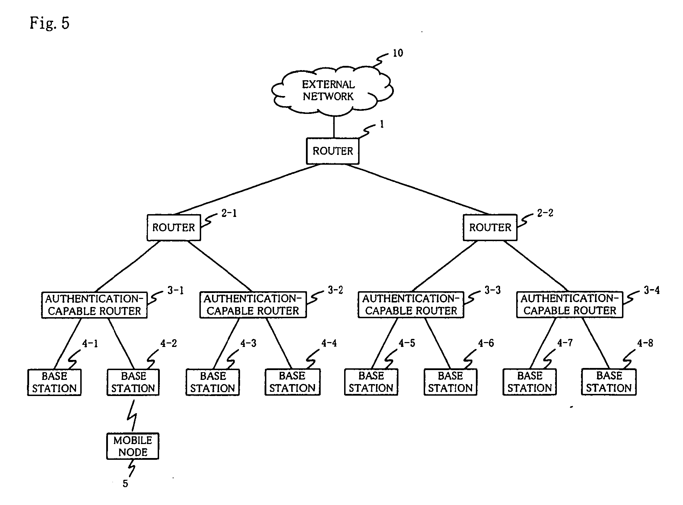

Fig. 5 shows in block form a wireless communication authentication system according to a first embodiment of the present invention. As shown in Fig. 5, the wireless communication authentication system according to the first embodiment comprises external network 10, a plurality of routers 1, 2-1, 2-2, a plurality of authentication-capable routers 3-1 through 3-4, a plurality of base stations 4-1 through 4-8, and mobile node 5. Router 1 is connected to external network 10. Routers 2-1, 2-2 are connected to and operate under router 1. Authentication-capable routers 3-1, 3-2 are edge routers with an authenticating function which are connected to and operate under router 2-1. Authentication-capable routers 3-3, 3-4 are edge routers with an authenticating function which are connected to and operate under router 2-2. Base stations 4-1, 4-2 are connected to and operate under authentication-capable router 3-1. Base stations 4-3, 4-4 are connected to and operate under authentication-capable router 3-2. Base stations 4-5, 4-6 are connected to and operate under authentication-capable router 3-3. Base stations 4-7, 4-8 are connected to and operate under router 3-4. Mobile node 5 sends packet data to and receives packet data from external network 10 through the wireless communication authentication system.

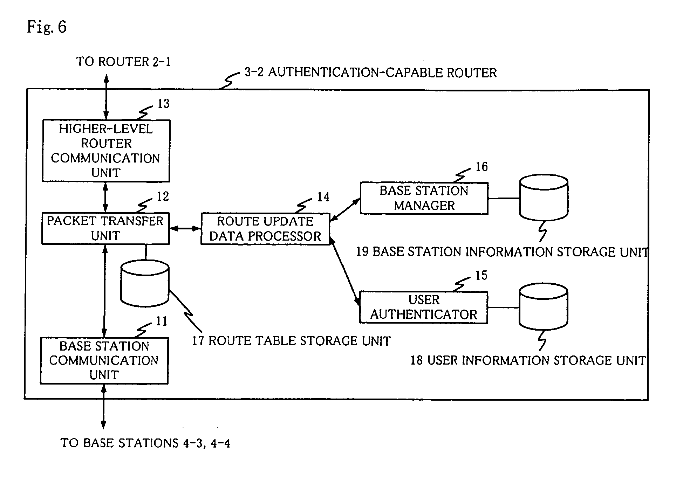

As shown in Fig. 6, authentication-capable router 3-2 shown in Fig. 5 comprises base station communication unit 11, packet transfer unit 12, higher-level router communication unit 13, route update data processor 14, user authenticator 15, base station manager 16, route table storage unit 17, user information storage unit 18, and base station information storage unit 19. Base station communication unit 11 communicates with base stations 4-3, 4-4 shown in Fig. 5. Route table storage unit 17 registers and stores transfer route information of packet data. Packet transfer unit 12 transfers packet data to base stations 4-3, 4-4 or router 2-1 based on the transfer route information stored in route table storage unit 17. Higher-level router communication unit 13 communicates with router 2-1 as a higher-level router shown in Fig. 5. Route update data processor 14 processes route update data sent from base stations 4-3, 4-4. Base station information storage unit 19 stores in advance information of the base stations that are connected to and operate under authentication-capable router 3-2. Base station manager 16 manages the information of the base stations which is stored in base station information storage unit 19. User information storage unit 18 stores in advance user information (mobile unit identifiers, secret keys, etc.) of users who are allowed to use the wireless communication authentication system. User authenticator 15 manages the user information stored in user information storage unit 18 and authenticates users based on the user information. Each of other authentication-capable routers 3-1, 3-3, 3-4 has structural and processing details identical to those of authentication-capable router 3-2 though different routers and base stations are connected to authentication-capable routers 3-1, 3-3, 3-4.

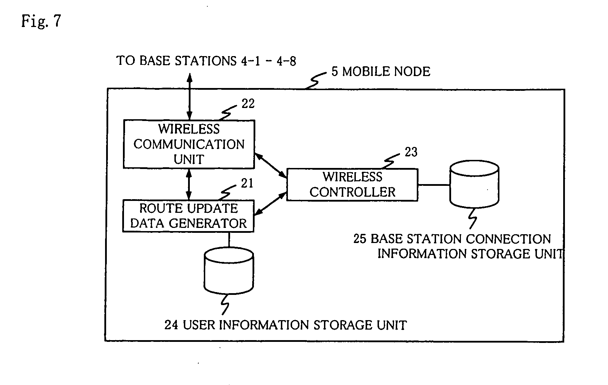

As shown in Fig. 7, mobile node 5 shown in Fig. 5 comprises route update data generator 21, wireless communication unit 22, wireless controller 23, user information storage unit 24, and base station connection information storage unit 25. Wireless communication unit 22 communicates with base stations 4-1 through 4-8 shown in Fig. 5 through a wireless link. Base station connection information storage unit 25 stores connection information required for mobile node 5 to connect to base stations 4-1 through 4-8. Wireless controller 23 manages the connection information stored in base station connection information storage unit 25, and controls wireless communication unit 22. User information storage unit 24 stores in advance user information including mobile unit identifiers, secret keys, etc. Route update data generator 21 manages the user information stored in user information storage unit 24, and generates route change data for registering or changing communication routes of packet data.

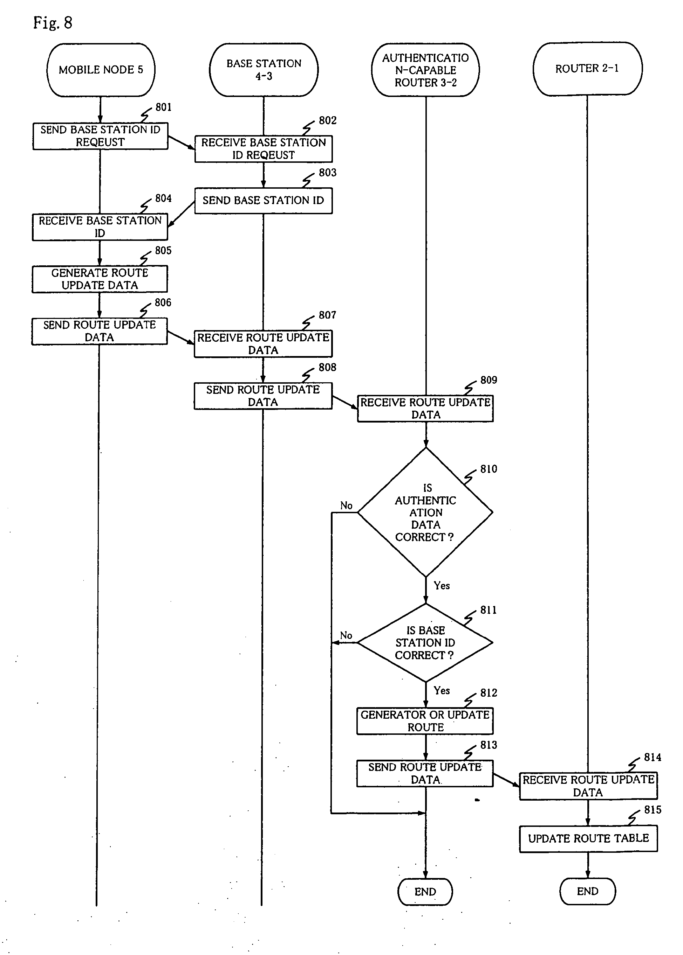

A wireless communication authentication process which is carried out in the wireless communication authentication system shown in Figs. 5 through 7 will be described below with reference to Fig. 8.

It is assumed that mobile node 5 has been connected to base station 4-2 and moves such that the base station to which mobile node 5 is connected changes from base station 4-2 to base station 4-3.

When mobile node 5 moves from an area covered by base station 4-2 to an area covered by base station 4-3, mobile node 5 establishes its connection to base station 4-3. Mobile node 5 sends a signal for requesting a base station ID representing an inherent identification number owned by base station 4-3 (step 801).

When the signal for requesting a base station ID is sent from mobile node 5, the signal is received by base station 4-3 (step 802).

When the signal for requesting a base station ID is received by base station 4-3, base station 4-3 sends the base station ID representing its own inherent identification number to mobile node 5 (step 803). The base station ID sent from base station 4-3 is received by mobile node 5 (step 804). The base station ID may be any inherent number for identifying a base station. For example, the base station ID may be an IP address or the latitude and longitude of a location where base station 4-3 is installed.

When the base station ID of base station 4-3 is received by wireless communication unit 22 of mobile node 5, the received base station ID is stored in base station connection information storage unit 25 by wireless controller 23. Route update data generator 21 generates route update data as authentication packet data from the stored base station ID, a highest-level router number as a destination of packet data representing transfer route information, a mobile unit identifier stored in user information storage unit 24, and a first authentication code that is generated from the above items of information and the secret key (step 805). The highest-level router number as a destination is an inherent identification number held by router 1, and may be an IP address or the like of router 1.

When the route update data is generated, the generated route update data is sent from wireless communication unit 22 to base station 4-3 (step 806). When the sent route update data is received by base station 4-3 (step 807), the received route update data is sent from base station 403 to authentication-capable router 3-2 (step 808).

When the route update date sent from base station 4-3 is received by base station communication unit 11 of authentication-capable router 3-2 (step 809), the received route update data is output from base station communication unit 11 to packet transfer unit 12. The route update data that is supplied to packet transfer unit 12 is transferred therefrom to route update data processor 14.

When the route update data is supplied to route update data processor 14, the route update data is authenticated by user authenticator 15.

Specifically, user authenticator 15 retrieves user information stored in user information storage unit 18, using as a retrieval key the mobile unit identifier included in the route update data. User authenticator 15 calculates a second authentication code using the secret key that is included in the user information that has been retrieved. User authenticator 15 compares the calculated second authentication code with the first authentication code included in the route update data (step 810).

If the retrieval of user information fails or the calculated second authentication code does not agree with the first authentication code included in the route update data, then the route update data is recognized as incorrect data, and the wireless communication authentication process is terminated.

If the calculated second authentication code agrees with the first authentication code included in the route update data, then base station manager 16 determines whether the base station ID included in the route update data is the base station ID of a base station that is connected to and operates under its own router, i.e., authentication-capable router 3-2 (step 811).

If base station manager 16 judges that the base station ID included in the route update data agrees with the base station ID, which is stored in base station information storage unit 19, of a base station that is connected to and operates under its own router, then base station manager 16 sends an agreement signal to route update data processor 14. Route update data processor 14 instructs packet transfer unit 12 to generate a route based on the route update data.

Packet transfer unit 12 now generates or updates a route for packet data sent from router 2-1 as a higher-level router for mobile node 5 (step 812). At this time, the route update data of mobile node 5 has been received through base station 4-3 by authentication-capable router 3-2. Therefore, the route to base station 4-3 is stored in route table storage unit 17 as a route for packet data sent from router 2-1 for mobile node 5.

If base station manager 16 judges that the base station ID included in the route update data does not agree with the base station ID, which is stored in base station information storage unit 19, of a base station that is connected to and operates under its own router, then the route update data is recognized as incorrect data, and the wireless communication authentication process is terminated.

Thereafter, higher-level router communication unit 13 sends the route update data to router 2-1 as a higher-level router (step 813).

When the route update data is received by router 2-1 (step 814), the route table in router 2-1 is updated based on the route update data (step 815).

### 2nd Embodiment:

A wireless communication authentication system according to a second embodiment of the present invention will be described below particularly with respect to a process of authenticating a connection to a wireless LAN base station according to the protocol of IEEE802.1x, for example.

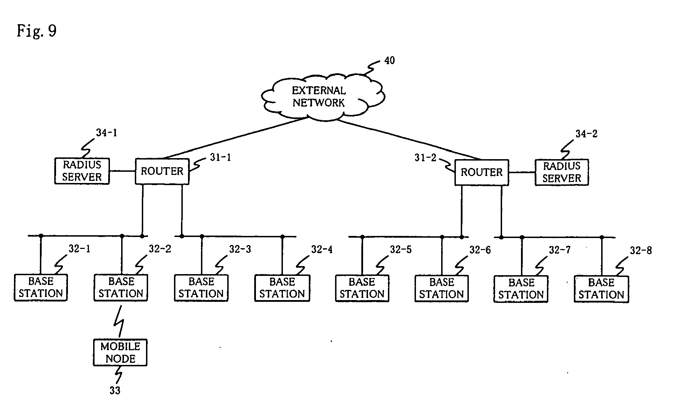

As shown in Fig. 9, the wireless communication authentication system according to the second embodiment comprises external network 40, a pair of routers 31-1, 31-2, a plurality of base stations 32-1 through 32-8, mobile node 33, and a pair of RADIUS servers 34-1, 34-2. Routers 31-1, 31-2 are connected to external network 40. Base stations 32-1 through 32-4 are connected to and operate under router 31-1. Base stations 32-5 through 32-8 are connected to and operate under router 31-2. Mobile node 33 sends packet data to and receives packet data from external network 40 through the wireless communication authentication system. RADIUS (Remote Authentication Dial-In User Service) servers 34-1, 34-2 are connected respectively to routers 31-1, 31-2. RADIUS servers 34-1, 34-2 are servers having a protocol for determining (authenticating) whether a network resource can be utilized or not and for recording (accounting) the fact that a network resource is utilized. RADIUS servers 34-1, 34-2 may be connected directly to base stations 32-1 through 32-8, not through routers 31-1, 31-2.

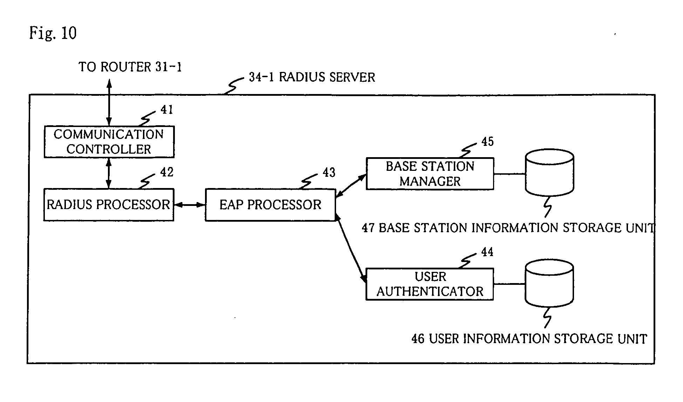

As shown in Fig. 10, RADIUS server 34-1 shown in Fig. 9 comprises communication controller 41, RADIUS processor 42, EAP processor 43, user authenticator 44, base station manager 45, user information storage unit 46, and base station information storage unit 47. Communication controller 41 communicates with router 31-1 shown in Fig. 9. RADIUS processor 42 performs an authentication process with respect to base stations 32-1 through 32-4 according to the RADIUS protocol. EAP processor 43 analyzes EAP (PPP Extensible Authentication Protocol) data that has been encapsulated according to the RADIUS protocol. Base station information storage unit 47 stores in advance information of the base stations connected to and operable under router 31-1 that is connected to RADIUS server 34-1. Base station manager 45 manages the information of the base stations which is stored in base station information storage unit 47. User information storage unit 46 stores in advance user information (user names, secret keys, etc.) of users who are allowed to use the wireless communication authentication system. User authenticator 44 manages the user information stored in user information storage unit 46 and authenticates users based on the user information. RADIUS server 34-2 has structural and processing details that are identical to those of RADIUS server 34-1 though a different router is connected to RADIUS server 34-2.

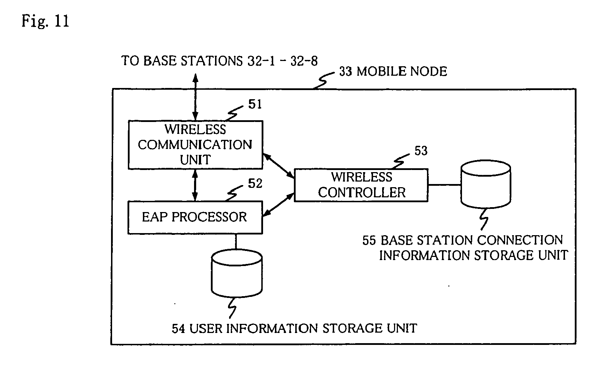

As shown in Fig. 11, mobile node 33 shown in Fig. 9 comprises wireless communication unit 51, EAP processor 52, wireless controller 53, user information storage unit 54, and base station connection information storage unit 55. Wireless communication unit 51 communicates with base stations 32-1 through 32-8 shown in Fig. 9 through a wireless link. Base station connection information storage unit 55 stores connection information required for mobile node 33 to connect to base stations 32-1 through 32-8. Wireless controller 53 manages the connection information stored in base station connection information storage unit 55, and controls wireless communication unit 51. User information storage unit 54 stores in advance user information including user names, secret keys, etc. EAP processor 52 manages the user information stored in user information storage unit 54, and generates an EAP authentication packet.

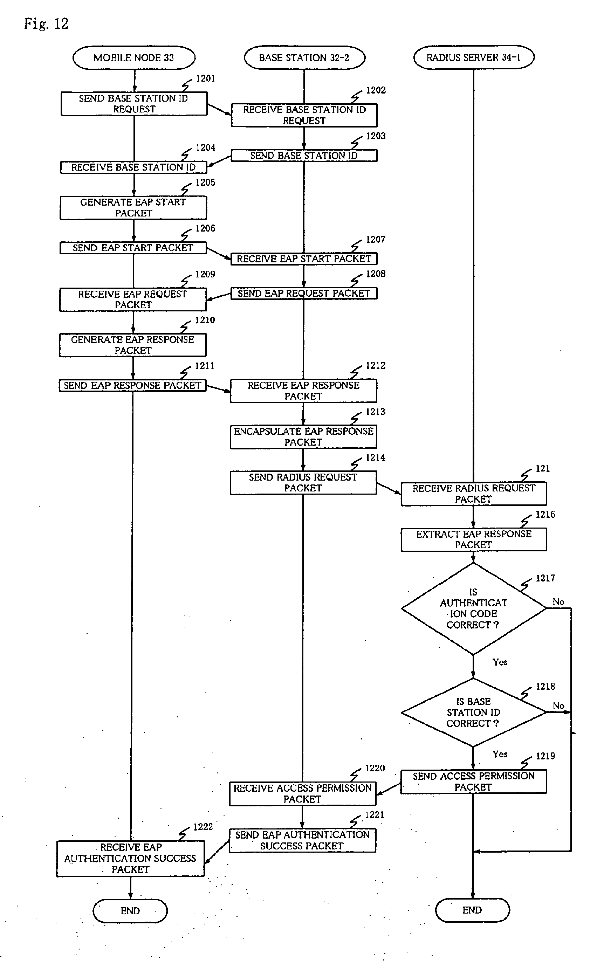

A wireless communication authentication process which is carried out in the wireless communication authentication system shown in Figs. 9 through 11 will be described below with reference to Fig. 12. Router 31-1 is not shown in Fig. 12 because no processing is performed in router 31-1 though packet data to be described below is routed through router 31-1.

It is assumed that mobile node 33 is currently present in an area covered by base station 32-2. Mobile node 33 establishes its connection to base station 32-2, and sends a signal for requesting a base station ID representing an inherent identification number owned by base station 32-2 (step 1201).

When the signal for requesting a base station ID is sent from mobile node 33, the signal is received by base station 32-2 (step 1202).

When the signal for requesting a base station ID is received by base station 32-2, base station 32-2 sends the base station ID representing its own inherent identification number to mobile node 33 (step 1203). The base station ID sent from base station 32-2 is received by mobile node 33 (step 1204). The base station ID may be any inherent number for identifying a base station. For example, the base station ID may be an IP address or the like.

When the base station ID of base station 32-2 is received by wireless communication unit 51 of mobile node 33, the received base station ID is stored in base station connection information storage unit 55 by wireless controller 53. The stored base station ID is indicated to EAP processor 52.

Thereafter, EAP processor 52 generates an EAPOL (EAP over LAN) start packet for starting an authentication process according to the protocol of IEEE802.1x (step 1205). The generated EAPOL start packet is sent from wireless communication unit 51 to base station 32-2 (step 1206). When the sent EAPOL start packet is received by base station 32-2 (step 1207), an EAP request packet of an authentication request type depending on the received EAPOL start packet is sent from base station 32-2 to mobile node 33 (step 1208). The sent EAP request packet is received by mobile node 33 (step 1209). The EAPOL start packet and the EAP request packet will not be described in detail below as existing packets are used as the EAPOL start packet and the EAP request packet.

When the EAP request packet is received by wireless communication unit 51 of mobile node 33, EAP processor 52 generates an EAP response packet representing authentication packet data serving as route update data, from the base station ID stored in base station connection information storage unit 55, information as to a destination of packet data representing transfer route information registered in router 31-1, a user name and a sequence number stored in user information storage unit 54, and a first authentication code that is generated from the above items of information and the secret key (step 1210). The information as to a destination of packet data is an inherent identification number owned by a destination of packet data sent from mobile node 33, may be an IP address or the like of the destination.

When the EAP response packet is generated, the generated EAP response packet is sent from wireless communication unit 51 to base station 32-2 (step 1211). When the EAP response packet sent from wireless communication unit 51 is received by base station 32-2 (step 1212), the received EAP response packet is encapsulated into a RADIUS access request packet (step 1213), which is sent from base station 32-2 to RADIUS server 34-1 (step 1214).

When the RADIUS access request packet is received by communication controller 41 of RADIUS server 34-1 (step 1215), the received RADIUS access request packet is transferred to RADIUS processor 42. RADIUS processor 42 extracts the EAP response packet from the RADIUS access request packet (step 1216).

The extracted EAP response packet is output from RADIUS processor 42 to EAP processor 43, which determines whether the EAP response packet supplied to EAP processor 43 has been sent from a legitimate user or not.

Specifically, user authenticator 44 retrieves user information stored in user information storage unit 46, using as a retrieval key the user name included in the EAP response packet. User authenticator 44 calculates a second authentication code using the secret key that is included in the user information that has been retrieved. User authenticator 44 compares the calculated second authentication code with the first authentication code included in the EAP response packet (step 1217).

If the retrieval of user information fails or the calculated second authentication code does not agree with the first authentication code included in the EAP response packet, then the EAP response packet is recognized as incorrect data, and the wireless communication authentication process is terminated.

If the calculated second authentication code agrees with the first authentication code included in the EAP response packet, then base station manager 45 determines whether the base station ID included in EAP response packet is the base station ID of a base station that is connected to and operates under its own router, i.e., router 31-1 (step 1218).

Base station manager 45 determines whether the base station ID included in the EAP response packet agrees with the base station ID, which is stored in base station information storage unit 47, of a base station connected to and operable under router 31-1 that is connected to RADIUS server 34-1 or not. If the base station IDs agree with each other, then base station manager 45 sends an agreement signal to EAP processor 43. Then, EAP processor 43 indicates an authentication success to RADIUS processor 42, which sends a RADIUS access permission packet through communication controller 41 to base station 32-2 (step 1219). At this time, router 31-1 on the route for the RADIUS access permission packet going from RADIUS server 34-1 to base station 32-2 recognizes that the connection of mobile node 33 to the wireless communication authentication system is permitted. The route table is updated for transferring packet data sent from external network 40 for mobile node 33 to base station 32-2.

When the RADIUS access permission packet is received by base station 32-2 (step 1220), base station 32-2 sends an EAP authentication success packet to mobile node 33 (step 1221). The EAP authentication success packet sent from base station 32-2 is received by mobile node 33 (step 1222), starting packet communications between mobile node 33 and external network 40.

Therefore, even though no authenticating function is present in routers 31-1, 31-2, a high-speed authentication process can be performed by authentication servers provided respectively near routers 31-1, 31-2.

When the authentication process is performed, RADIUS servers 34-1, 34-2 may send encryption keys to base stations 32-1 through 32-8 and mobile node 33.

RADIUS servers 34-1, 34-2 shown in Fig. 9 may be replaced with servers employing another authentication protocol. '

The numbers of routers 1, 2-1, 2-2, 31-1, 31-2, authentication-cable routers 3-1 through 3-4, RADIUS servers 34-1, 34-2, and base stations 4-1 through 4-8, 32-1 through 32-8, and the number of hierarchical levels thereof are not limited to the illustrated numbers.

While preferred embodiments of the present invention have been described using specific terms, such description is for illustrative purposes only, and it is to be understood that changes and variations may be made without departing from the spirit or scope of the following claims.

## Claims

1. A wireless communication authentication system comprising a mobile node connected to a base station through a wireless link and a router disposed on a communication route for packet data sent to said mobile node, for registering transfer route information about said packet data in a route table,
wherein said mobile node acquires an inherent identification number owned by a base station connected to the mobile node, and sends authentication packet data including said identification number and information providing said transfer route information through said base station to said router; and
wherein said router holds an inherent identification number owned by a base station connected to the router, and, if the identification number included in said authentication packet data agrees with the identification number held by said router, registers said transfer route information in said route table based on said authentication packet data.

2. A wireless communication authentication system comprising a mobile node connected to a base station through a wireless link and a router disposed on a communication route for packet data sent to said mobile node, for registering transfer route information about said packet data in a route table,
wherein said mobile node acquires an inherent identification number owned by a base station connected to the mobile node, and sends authentication packet data including said identification number and information providing said transfer route information through said base station to said router; and
wherein said router is connected to an authentication server, and said authentication server holds an inherent identification number owned by a base station connected to said router, and, if the identification number included in said authentication packet data sent from said mobile node through said base station and said router agrees with the identification number held by said authentication server, registers said transfer route information in said route table based on said authentication packet data.

3. A wireless communication authentication system comprising a mobile node connected to a base station through a wireless link, and an authentication server connected to said base station;
wherein said mobile node acquires an inherent identification number owned by the base station connected to the mobile node, and sends authentication packet data including said identification number through said base station to said authentication server; and
wherein said authentication server holds the inherent identification number owned by the base station connected to the authentication server, and, if the identification number included in said authentication packet data sent from said mobile node through said base station agrees with the identification number held by said authentication server, permits said mobile node to connect to said base station.

4. A wireless communication authentication system according to claim 2, wherein said authentication server comprises a RADIUS server.

5. A wireless communication authentication system according to claim 3, wherein said authentication server comprises a RADIUS server.

6. A wireless communication authentication system according to claim 1, wherein the inherent identification number owned by said base station represents the latitude and longitude of a location where said base station is installed.

7. A wireless communication authentication system according to claim 2, wherein the inherent identification number owned by said base station represents the latitude and longitude of a location where said base station is installed.

8. A wireless communication authentication system according to claim 3, wherein the inherent identification number owned by said base station represents the latitude and longitude of a location where said base station is installed.

9. A method to be carried out by a wireless communication authentication system for authenticating, with authentication packet data, data for registering transfer route information for packet data to be sent to a mobile node connected to a base station through a wireless link, in a route table owned by a router disposed on a communication route for said packet data, said method comprising the steps of:
controlling said mobile node to acquire an inherent identification number owned by the base station connected to the mobile node, and to send said authentication packet data including said identification number and information providing said transfer route information through said base station to said router;
comparing the identification number included in the authentication packet data received by said router and an inherent identification number owned by the base station connected to the router and held by said router with each other; and
if the compared identification numbers agree with each other, registering said transfer route information in said route table based on said authentication packet data.

10. A method to be carried out by an authentication server for authenticating the connection of a mobile node connected to a base station through a wireless link, to said base station, based on authentication packet data, comprising the steps of:
controlling said mobile node to acquire an inherent identification number owned by the base station connected to the mobile node, and to send said authentication packet data including said identification number to said authentication server;
controlling said authentication server to compare the identification number included in said authentication packet data sent from said mobile node through said base station and an inherent identification number owned by the base station connected to the authentication server and held by said authentication server with each other; and
if the compared identification numbers agree with each other, permitting said mobile node to connect to said base station.
